# EUROPÄISCHE PATENTANMELDUNG

(11) **EP 1 455 280 A2**
(43) Veröffentlichungstag der Anmeldung: **08.09.2004**
(21) Anmeldenummer: 04100660.2
(22) Anmeldetag: 19.02.2004
(51) Int. Cl.: G06F 17/10

(54) **Verfahren zur Analyse von Daten**

(30) Priorität: 21.02.2003 DE 10307372
(71) Anmelder: Noll, Uwe, 64285 Darmstadt (DE)
(72) Erfinder: Noll, Uwe, 64285 Darmstadt (DE)
(74) Vertreter: Kewitz, Ansgar

(57) **Zusammenfassung**

Bei einem Verfahren zur Analyse von einem Prozess zugeordneten Daten, die als Vektoren vorliegen, wobei in einer Datenbank gespeicherte Vektoren mit zu vergleichenden Vektoren verglichen werden, ist vorgesehen, dass die Vektoren normalisiert werden, dass zu Zwecken des Vergleichs aus den normalisierten gespeicherten Vektoren und den normalisierten zu vergleichenden Vektoren diejenigen selektiert werden, deren Beträge weniger als eine erste Vorgabe voneinander abweichen, und dass aus den selektierten normalisierten gespeicherten Vektoren und den selektierten normalisierten zu vergleichenden Vektoren eine von dem jeweiligen eingeschlossenen Winkel abhängige Größe gebildet wird, die mit einer zweiten Vorgabe verglichen wird.

## Beschreibung

Die Erfindung betrifft ein Verfahren zur Analyse von einem Prozess zugeordneten Daten, die als Vektoren vorliegen, wobei in einer Datenbank gespeicherte Vektoren mit zu vergleichenden Vektoren verglichen werden.

In verschiedenen Informationssystemen besteht häufig die Aufgabe, sehr große Datenmengen zu analysieren, insbesondere Daten, die von Datensätzen gebildet werden - im folgenden als Vektoren bezeichnet - miteinander zu vergleichen und einzuordnen. So sind beispielsweise bei einem analytischen Informationssystem gemäß DE 199 63 123 A1 folgende Komponenten vorgesehen:
- Eine Steuerung zur Ablaufkonfiguration und Parametrierung weiterer Komponenten,
- eine Datenbankschnittstelle, über die das analytische Informationssystem mit verschiedenen Datenbanken verbunden ist,
- eine Wissensdatenbank, in der Ausschlusskriterien, Schwellwerte und funktionale Abhängigkeiten abgelegt sind,
- eine Fokussierungskomponente zur Festlegung, welche Teile von Daten analysiert werden,
- eine Analysekomponente zum Ermitteln von Strukturen, Auffälligkeiten und Ähnlichkeiten in den Daten,
- eine Bewertungskomponente für in der Analysekomponente ermittelten Strukturen, Auffälligkeiten, Ähnlichkeiten unter Zuhilfenahme der in der Wissensdatenbank abgelegten Kriterien,
- eine Komponente zur Parameteranpassung für nachfolgende Steuerungen und/oder Ausgabegeräte, wobei in der Analysekomponente zur Strukturermittlung folgendes erstes Erkennungsverfahren eingesetzt wird:

- Überführung einer vorgegebenen Datenabfrage in einen ersten Vektor mit Raumkoordinaten, die durch die Datenattribute vorgegeben sind,
- Überführung der über die Fokussierungskomponente und der Datenbankschnittstelle erhaltenen Daten einer ersten Stichprobe in Vektoren gleicher Dimensionen wie der erste Vektor,
- Wiederholung des ersten Erkennungsverfahren mit einer neuen erweiterten Stichprobe bei Nichtermitteln einer Verteilungsfunktion und
- Abspeicherung der gefundenen Struktur in der Wissensdatenbank oder nach Untersuchung aller Datenwerte Abbruch des Verfahrens bzw. Neubeginn des Erkennungsverfahrens mit einer neuen Datenabfrage.

Dieses Informationssystem weist die Vorteile auf, dass zur Anpassung an verschiedene Aufgaben nur die Analysekomponente verändert wird, so dass schon vorhandene Bauteile (Subsysteme) weiter benutzt werden können. Es erhöht in einfacher Weise zusammen mit der Zunahme der Analyseschnelligkeit die Wirtschaftlichkeit. Ferner ist vorteilhaft, dass Datenproben aus einem vorselektierten Datenwertebereich genommen und ihre Bedeutung hinsichtlich der Änderung im zu untersuchenden Muster geprüft werden. Überdies wird eine große Leistungssteigerung erreicht, da nur Analyseprozesse mit einer hohen Wahrscheinlichkeit auf Erfolg angestoßen und einfache mathematische Transformation im Vergleich zu den bekannten analytischen Informationssystemen eingesetzt werden.

Ferner ist aus DE 101 52 762 A1 ein Verfahren zur Analyse des zeitlichen Ablaufs von Prozessen in Echtzeit, insbesondere von Störungsbeseitigungen in Telekommunikationsnetzen, bekannt, bei dem die Bearbeitungszeit mehrere Zeitabschnitte und/oder die Raumzeit zuzüglich mehrerer Dimensionen umfasst, die Dauern der Zeitabschnitte jeweils eines Prozesses einem Computer zugeführt, quadriert, normiert und in einem Speicher als Vektor abgelegt werden. Die Vektoren mehrerer Prozesse werden in Gruppen aufgeteilt, wobei die Vektoren jeweils innerhalb einer Gruppe statistisch verarbeitet werden.

Bei dem bekannten analytischen Informationssystem und bei dem bekannten Verfahren werden jeweils als Vektoren vorliegende Daten mit gespeicherten Vektoren verglichen. Die "Nähe" der zu vergleichenden Vektoren mit den gespeicherten wird dann als Information für die Erkennung eines Musters oder für die Zugehörigkeit zu bestimmten Gruppen (Clustern) von Vektoren benutzt. In beiden Fällen wird dabei die Differenz der zu vergleichenden Vektoren ermittelt, was für eine Reihe von Anwendungen zu unbefriedigenden Ergebnissen führt.

Aufgabe der vorliegenden Erfindung ist es daher, einen Vergleich der Vektoren dahingehend zu ermöglichen, dass Abhängigkeiten von gespeicherten Daten mit zu vergleichenden Daten schneller erkannt und ausgewertet werden können.

Diese Aufgabe wird dadurch gelöst, dass die Vektoren normalisiert werden, dass zu Zwecken des Vergleichs aus den normalisierten gespeicherten Vektoren und den normalisierten zu vergleichenden Vektoren diejenigen selektiert werden, deren Beträge weniger als eine erste Vorgabe voneinander abweichen, und dass aus den selektierten normalisierten gespeicherten Vektoren und den selektierten normalisierten zu vergleichenden Vektoren eine von dem jeweiligen eingeschlossenen Winkel abhängige Größe gebildet wird, die mit einer zweiten Vorgabe verglichen wird.

Vorzugsweise ist dabei vorgesehen, dass durch den Vergleich der von dem eingeschlossenen Winkel abhängigen Größe mit der zweiten Vorgabe die Zugehörigkeit des zu vergleichenden Vektors mit einer von mindestens einem der gespeicherten Vektoren beschriebenen Gruppe festgestellt wird, wenn die von dem eingeschlossenen Winkel abhängige Größe kleiner als die zweite Vorgabe ist.

Das erfindungsgemäße Verfahren ist zur Analyse, statistischen Erfassung und Klassifizierung von großen Datenmengen geeignet, wie sie bei Prozessen aller Art anfallen. Außer den eingangs erwähnten bekannten Verfahren kommen beispielsweise industrielle, wirtschaftliche und wissenschaftliche und statistisch zu erfassende, beispielsweise in der Natur oder Zivilisation ablaufende, andere Prozesse in Frage, wobei verschiedene Größen und Komponenten gegebenenfalls auch wechselseitig zusammenhängen und sich beeinflussen.

Bei einer vorteilhaften Ausgestaltung der Erfindung ist vorgesehen, dass die vom eingeschlossenen Winkel abhängige Größe das Vektorprodukt ist. Eine andere vorteilhafte Ausgestaltung besteht darin, dass die vom eingeschlossenen Winkel abhängige Größe ein Produkt aus dem eingeschlossenen Winkel und dem Betrag des jeweiligen selektierten normalisierten Vektors ist.

Das erfindungsgemäße Verfahren ist unter anderem deshalb vorteilhaft, weil die Vorselektion aufgrund der Beträge mit sehr geringem Rechenaufwand durchgeführt werden kann und somit zu vergleichende Vektoren, die bereits wegen der unterschiedlichen Beträge ausgeschieden werden, nicht Gegenstand von nachfolgenden aufwendigeren Berechnungen sind.

Eine genauere Vorselektion ist bei dem erfindungsgemäßen Verfahren dadurch möglich, dass diejenigen normalisierten Vektoren selektiert werden, für die alle Komponenten jeweils weniger als eine entsprechende Vorgabe voneinander abweichen.

Ausführungsbeispiele der Erfindung sind in der Zeichnung anhand mehrerer Figuren dargestellt und in der nachfolgenden Beschreibung näher erläutert. Es zeigt:
Fig. 1 eine Darstellung zur Bildung des Vektorproduktes;
Fig. 2 zu vergleichende Vektoren bei dem bekannten analytischen Informationssystem; und
Fig. 3 ein Vergleich von Vektoren bei dem bekannten Verfahren zur Analyse des zeitlichen Ablaufs von Prozessen in Echtzeit.

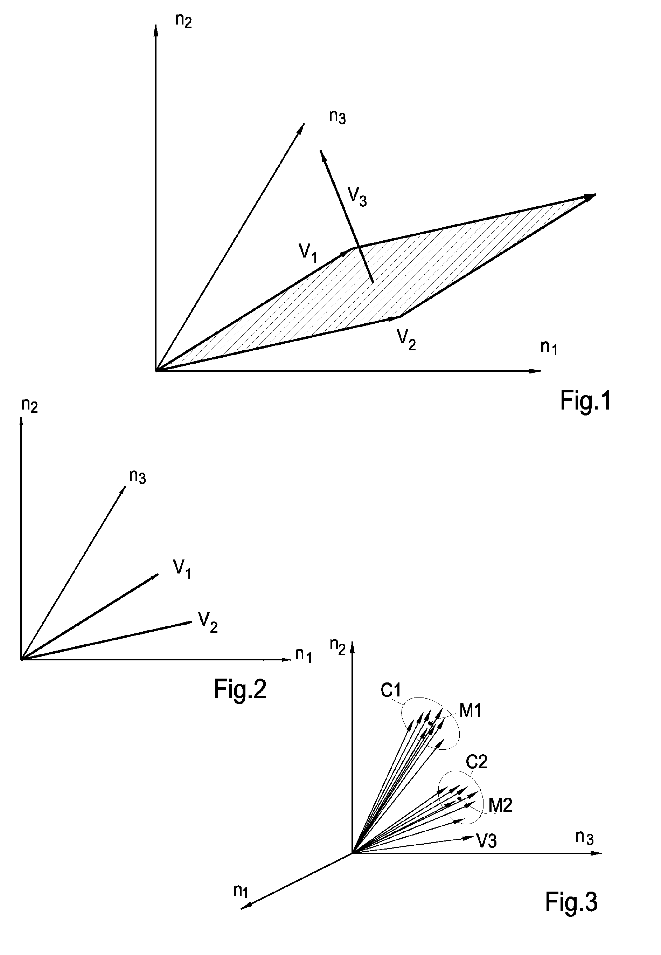

Fig. 1 stellt zwei Vektoren V1 und V2 in einem dreidimensionalen Raum mit den Koordinaten n1, n2 und n3 dar. Die Vektoren V1 und V2 haben bereits die Normalisierung und Selektion gemäß vorangegangenen Verfahrensschritten durchlaufen. Das Vektorprodukt V3 entspricht der zwischen den Vektoren V1 und V2 aufgespannten Vektoren. Die Erfindung ist nicht auf dreidimensionale Vektoren beschränkt, wie es in Fig. 1 dargestellt ist. Es können beliebig viele Dimensionen vorliegen, beispielsweise drei Raumkoordinaten und eine Zeitkoordinate (Raumzeit) sowie weitere Dimensionen, beispielsweise Größen, die an dem durch die Raumkoordinaten bestimmten Punkt zu der durch die Zeitkoordinate bestimmten Zeitpunkt messbar sind.

Fig. 2 zeigt ein dreidimensionales Abfragebeispiel aus dem Analyse-Informationssystem. Die Abfrage ist als Vektor V1 dargestellt. Aus den für einen bestimmten Zeitpunkt zur Verfügung gestellten Daten wird eine Stichprobe von 10% der vorhandenen Daten gewonnen. Die Daten dieser Probe werden anhand in einer Wissensdatenbank gespeicherter Erfahrungswerte für einen Wertebereich ausgewählt, in deren Mittelpunkt sich die Abfrage befindet. Da die Daten der Stichprobe ebenfalls mehrdimensional sind, lassen sie sich als Vektoren V2 darstellen und begrenzen einen Raumkörper um den Abfragevektor V1. Soll nun die Ähnlichkeit der transformierten Vektoren zum Abfragevektor V1 erhöht werden, dann ist die simultane Ermittlung des Raumwinkels besonders vorteilhaft, da sich die Ähnlichkeit antiproportional zum Raumwinkel verhält. Das heißt: je größer der Raumwinkel, umso kleiner die Musterähnlichkeit. Die vorteilhafte Produktbildung aus normalisiertem Differenzvektor und normalisiertem Raumwinkel ergibt die Fläche, welche zwischen Abfragevektor V1 und Vektor V2 aufgespannt ist, wobei die Ähnlichkeits-Wahrscheinlichkeit WA~1/AV1V2 gegeben ist.

Fig. 3 zeigt eine Aufgabe zum Vergleichen von Vektoren bei dem bekannten Verfahren zur Analyse des zeitlichen Ablaufs von Prozessen in Echtzeit. Nach einer vorgegebenen Beobachtungszeit haben sich zwei Cluster C1, C2 mit Vektoren gebildet. Für jeden dieser Cluster wird ein Mittelwert M1, M2 berechnet. Kommt ein neuer Vektor V3 hinzu, so kann dessen Zugehörigkeit zu einem der Cluster C1, C2 mit dem erfindungsgemäßen Verfahren geprüft werden. Dabei kann die Varianz des Clusters als Basis für die vorgegebene Größe beim Vergleich mit dem Vektorprodukt dienen.

## Patentansprüche

1. Verfahren zur Analyse von einem Prozess zugeordneten Daten, die als Vektoren vorliegen, wobei in einer Datenbank gespeicherte Vektoren mit zu vergleichenden Vektoren verglichen werden, **dadurch gekennzeichnet, dass** die Vektoren normalisiert werden, dass zu Zwecken des Vergleichs aus den normalisierten gespeicherten Vektoren und den normalisierten zu vergleichenden Vektoren diejenigen selektiert werden, deren Beträge weniger als eine erste Vorgabe voneinander abweichen, und dass aus den selektierten normalisierten gespeicherten Vektoren und den selektierten normalisierten zu vergleichenden Vektoren eine von dem jeweiligen eingeschlossenen Winkel abhängige Größe gebildet wird, die mit einer zweiten Vorgabe verglichen wird.

2. Verfahren nach Anspruch 1, **dadurch gekennzeichnet, dass** durch den Vergleich der von dem eingeschlossenen Winkel abhängigen Größe mit der zweiten Vorgabe die Zugehörigkeit des zu vergleichenden Vektors mit einer von mindestens einem der gespeicherten Vektoren beschriebenen Gruppe festgestellt wird, wenn die von dem eingeschlossenen Winkel abhängige Größe kleiner als die zweite Vorgabe ist.

3. Verfahren nach einem der Ansprüche 1 oder 2, **dadurch gekennzeichnet, dass** die vom eingeschlossenen Winkel abhängige Größe das Vektorprodukt ist.

4. Verfahren nach einem der Ansprüche 1 oder 2, **dadurch gekennzeichnet, dass** die vom eingeschlossenen Winkel abhängige Größe ein Produkt aus dem eingeschlossenen Winkel und dem Betrag des jeweiligen selektierten normalisierten Vektors ist.

5. Verfahren nach einem der vorhergehenden Ansprüche, **dadurch gekennzeichnet, dass** diejenigen normalisierten Vektoren selektiert werden, für die alle Komponenten jeweils weniger als eine entsprechende Vorgabe voneinander abweichen.
